# EUROPEAN PATENT APPLICATION

(11) **EP 2 147 601 A1**
(43) Date of publication of application: **27.01.2010**
(21) Application number: 08380224.9
(22) Date of filing: 24.07.2008
(51) Int. Cl.: A21C 1/06, A21B 3/15, A21B 7/00, F24C 15/16

(54) **Tool for making bread for a household oven**

(71) Applicant: Fagor, S. Coop., 20500 Mondragon (Gipuzkoa) (ES)
(72) Inventor: Zubiate Gorosabel, Urtzi, 20550 Aretxabaleta (Gipuzkoa) (ES); Armendariz Ramos, Jean Ignacio, 20540 Eskoriatza (Gipuzkoa) (ES); Ugarte Burgos, Asier, 20530 Leintz Gatzaga (Gipuzkoa) (ES)
(74) Representative: Igartua, Ismael

(57) **Abstract**

Tool for making bread for a household oven, which comprises a container (3) with a cavity (30) where the ingredients required to make bread are disposed, kneading means adapted for stirring and/or kneading said ingredients, and actuating means (9) that act on the kneading means so that said kneading means rotates in respect of an axis of rotation and said ingredients may be stirred and/or kneaded by said kneading means. The kneading means comprise at least an eccentric area (10) that rotates in relation to the axis of rotation (2) when the kneading means rotate in relation to said axis of rotation (2), and the kneading means and the container (3) are disposed in relation to each other in such a way that when said kneading means rotate, the eccentric area (10) enters and exits the container (3), thereby stirring and/or kneading the ingredients.

## Description

### TECHNICAL FIELD

The present invention relates to tools for making bread, and more specifically to tools adapted for making bread in household ovens.

### PRIOR ART

Household ovens adapted for making bread are known from prior art. Generally, these types of ovens comprise specific methods for making bread and/or comprise additional tools designed for the purpose of making bread, such as the ovens disclosed in Japanese documents JP2004194506A and JP2007189940A. In these ovens a mass is inserted in the oven and a specific method for controlling times and temperatures is employed.

Some documents, such as patent GB2406801A for example, disclose a microwave oven with additional tools to make bread. In this case a container is inserted into the oven with the ingredients required to make bread (flour, yeast, water etc), and said oven comprises kneading means and actuating means that act on said kneading means to cause them to knead or stir said ingredients, thereby creating a mass from which bread is made.

### DISCLOSURE OF THE INVENTION

It is an object of the present invention to provide a Tool for making bread for a household oven, as described in the claims.

The tool of the invention is adapted for being used in a household oven. Said oven comprises a cavity in which the food is disposed, said tool being disposed in said cavity to make bread. The tool comprises a container with a cavity in which the ingredients required to make bread are disposed, kneading means associated to an inner wall of the oven adapted to stirring and/or kneading the ingredients disposed in the container, and actuating means that act on the kneading means to cause them to stir and/or knead said ingredients.

The actuating means are disposed on a wall of the cavity of the oven and cause the kneading means to rotate in relation to an axis of rotation in order to stir and/or knead the ingredients disposed in the container, the kneading means comprising at least an eccentric area that rotates in relation to the axis of rotation when the kneading means rotate in relation to said axis of rotation.

The kneading means and the container are disposed in relation to each other in such a way in the cavity of the oven that when said kneading means rotate in relation to the axis of rotation, at least part of the eccentric area enters and exits the cavity of said container, thereby stirring and/or kneading the ingredients disposed in said cavity.

As a result, the tool of the invention may be used to stir and/or knead ingredients required to make bread in a conventional household oven.

These and other advantages and characteristics of the invention will be made evident in the light of the drawings and the detailed description thereof.

### DESCRIPTION OF THE DRAWINGS

FIG. 1 shows an embodiment of the tool of the invention, disposed in a cavity of a household oven.
FIG. 2 is a perspective view of an embodiment of the container of the tool of FIG. 1.
FIG. 3 is a perspective view of a tray according to FIG. 1.
FIG. 4 is a perspective view of an embodiment of the kneading means of the tool of FIG. 1.
FIG. 5 shows the clamping means of the kneading means of FIG. 4.
FIG. 6 is a ground view of the container of FIG. 4 and of the kneading means of FIG. 5.
FIG. 7 is a cross-sectional side view of the container and the kneading means of FIG. 6, according to the VI-VI line.
FIG. 8 is a side view of the container and the kneading means of FIG. 6.
FIG. 9 is a perspective view of a mass support disposed in a tray according to FIG. 3.
FIG. 10 is a view in perspective of the mass support of FIG. 9.

### DETAILED DISCLOSURE OF THE INVENTION

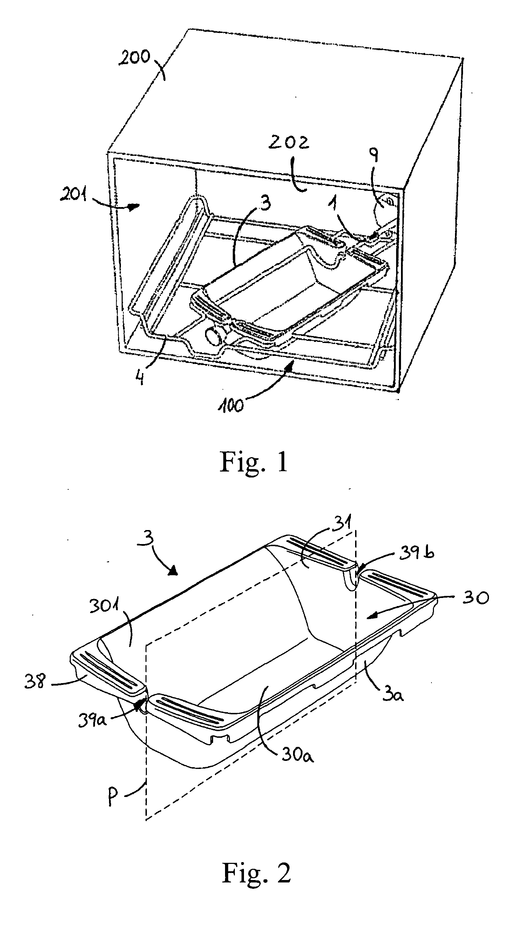

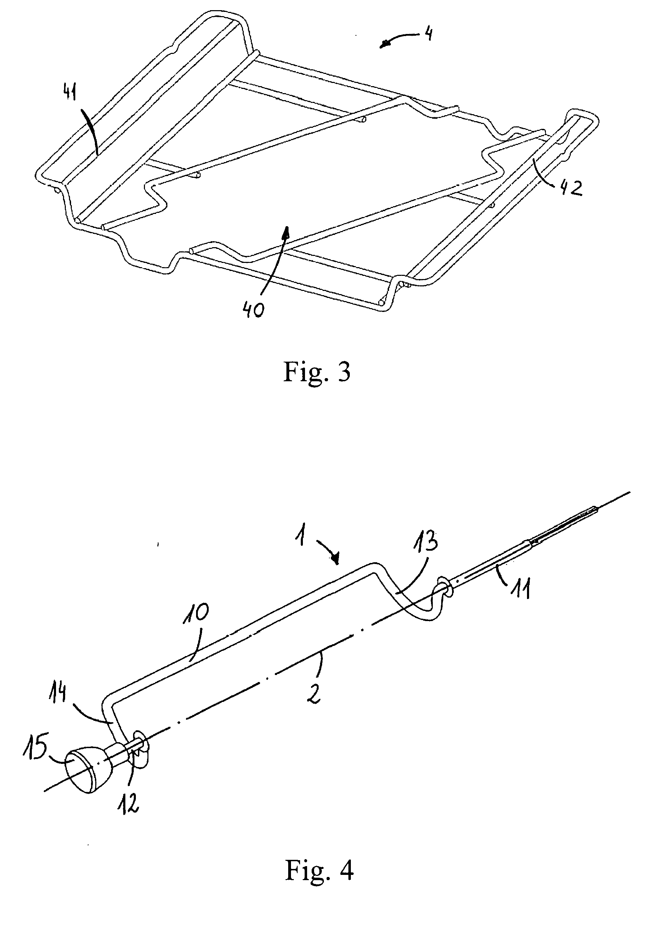

The tool 100 for making bread of the invention is designed for use in household ovens 200. A household oven 200 comprises a cavity 201 in which the food is disposed, the tool 100 of the invention being disposed in said cavity 201 in order to make bread, as shown in the embodiment of the tool 100 of Figure 1. Said tool 100 comprises a container 3 shown in Figure 2 that comprises a cavity 30 in which are disposed the ingredients required to make bread (flour, yeast and water for example), kneading means that may stir and/or knead the ingredients disposed in the container 3, and actuating means 9 that are connected to an inner wall 202 of the oven 200 and which are designed to cause the kneading means to stir and/or knead said ingredients. The tool 100 of the invention may also comprise a tray 4, shown in Figure 3, that comprises preferably a grille designed to be disposed in the cavity 201 of the oven 200 at different heights cooperating with side rails of said oven 200 (not shown in Figures), and which comprises a tray housing 40 designed to house the container 3, which is supported in the cavity 201 of the oven 200 by means of said tray 4. For this purpose, the external shape of said container 3 preferably comprises two sloping side walls 3c and 3d, the minimum width of said container 3 being smaller than the width of the tray housing 40 and the maximum width of said container 3 being greater than the width of said tray housing 40.

The actuating means 9 preferably comprise conventional means (a motor, for example) in order to cause a rotation, such as the rotation of a rod in a oven designed for the use of a spit in its interior, as disclosed for example in FR2730916A1 document, and are disposed and fixed on the inner wall 202 of the cavity 201 of the oven 200, which is preferably a back wall 202 of said cavity 201, said actuating means 9 being capable of being located inside the cavity 201 of the oven 200 or largely hidden by said inner wall 202. The kneading means are connected to the actuating means 9, said actuating means 9 thereby causing said kneading means to rotate in relation to an axis of rotation 2 in order to stir and/or knead the ingredients disposed in the container 3. Said kneading means comprise at least an eccentric area 10 that rotates in relation to the axis of rotation 2 when the kneading means rotate in relation to said axis of rotation 2, the kneading means and the container 3 being disposed in relation to each other in such a way in the cavity 201 of the oven 200 that when said kneading means rotate in relation to the axis of rotation 2, at least part of the eccentric area 10 enters and exits the cavity 30 of said container 3, thereby stirring and/or kneading the ingredients disposed in said cavity 30. With reference to Figure 2, the cavity 30 of the container 3 is symmetrical in relation to a longitudinal vertical plane P, the axis of rotation 2 being disposed on said plane P preferably in a substantially horizontal position.

With reference to Figure 4, the kneading means comprise a first section of rod 11 and a second section of rod 12, the eccentric area 10 being disposed between both sections of rod 11 and 12 and said kneading means being connected to the actuating means 9 by means of one of said sections 11 or 12. In a preferred embodiment the kneading means are supported or connected to the container 3, said container 3 comprising a first rod housing 39a where the section of rod 11 is housed and a second rod housing 39b where the second section of rod 12 is housed. As a result, the kneading means are preferably supported or connected to the container 3, although they may not be, being connected to the actuating means 9 by means of one of the sections of rod 11 or 12 and connected to another wall of the cavity 201 of the oven 200 by means of the other sections of rod 12 or 11, this wall facing the inner wall 202. The axis of rotation 2 corresponds with said sections of rod 11 and 12.

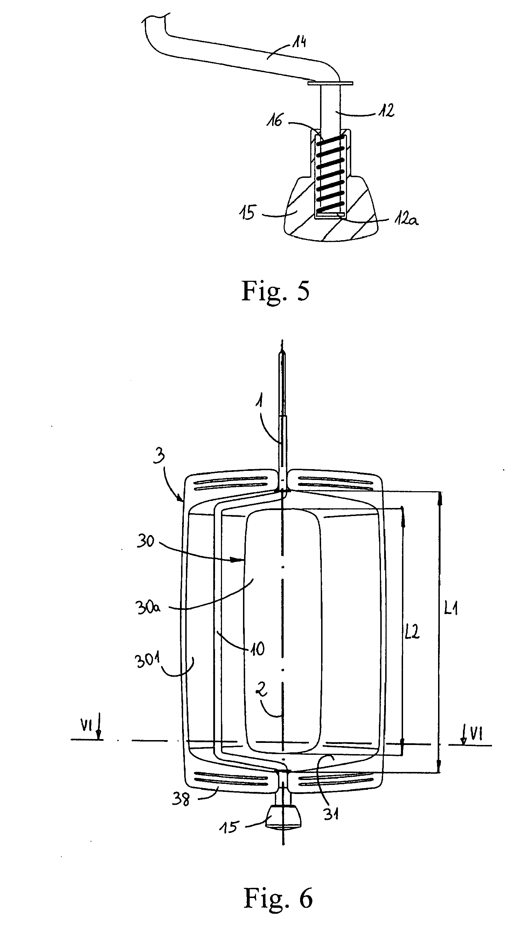

In the preferred embodiment, the kneading means comprise clamping means shown in Figure 5, which are connected to the second section of rod 12 in order to keep it locked in the corresponding rod housing 39b and thereby prevent said kneading means from accidentally coming free from the container 3 while the ingredients disposed in the cavity 30 of said container 3 are being stirred and/or kneaded. Said clamping means comprise a hollow clamping piece 15 that is connected, while offering freedom of movement, to said second section of rod 12 surrounding it at least partially and a spring 16 fixed by one end to said second section of rod 12 and by another end to the inside of the clamping piece 15, so that when a user acts on said clamping piece 15, said clamping piece 15 may move in relation to the section of rod 12 and thus no longer surround said second section of rod 12, with the spring 16 expanding, said clamping piece 15 being capable of returning to its original position, surrounding said second section of rod 12, by means of said spring 16 when it is no longer acted upon. The second section of rod 12 comprises a projection 12a to prevent the clamping piece 15 from coming completely free from said second section of rod 12. As a result, in order to dispose the sections of rod 11 and 12 in the rod housings 39a and 39b respectively, the user causes the movement of the clamping piece 15 and disposes said sections of rod 11 and 12 in said rod housings 39a and 39b, subsequently releasing said clamping piece 15, with said sections of rod 11 and 12 being disposed in said rod housings 39a and 39b as shown in Figure 6.

In the preferred embodiment, the kneading means comprise a rod 1 shown in Figure 4, which comprises the sections of rod 11 and 12 and the eccentric area 10, said eccentric area 10 corresponding with an eccentric section of rod. Said eccentric section of rod is a section substantially parallel to the axis of rotation 2, said eccentric section of rod rotating with a specific radius of rotation R in relation to said axis of rotation 2 when said kneading means rotate. Said rod 1 is preferably disposed diagonally in the cavity 201 of the oven 200, the container 3 thus being disposed diagonally in said cavity 201.

The eccentric section of rod in the rod 1 is connected to the sections of rod 11 and 12 by means of respective connecting sections 13 and 14, the radius of rotation R being determined by the length of the connecting sections 13 and 14. Said connecting sections 13 and 14 are preferably curved, so that they help move the ingredients of the container 3 so they may be stirred and/or kneaded, and, when said kneading means exit the cavity 30 of the container 3 during their rotation, said connecting sections 13 and 14 enable any part of the mass that they take with them or which are deposited on said connecting sections 13 and 14 to fall into said cavity 30 so it may be stirred and/or kneaded with the rest of the compact mass when said kneading means enter said cavity 30 once more, when said ingredients form a compact mass. Said connecting sections 13 and 14 respectively connect one end of the sections of rod 11 and 12 to the ends of the eccentric section of rod, preferably not extending perpendicular to said eccentric section of rod, the distance between the sections of rod 11 and 12 being greater than the length of said eccentric section of rod. The cavity 30 of the container 3 is designed in accordance with the connecting sections 13 and 14 and with the eccentric section of rod with the purpose of utilising the stirring and/or kneading capacity of the kneading means to the maximum, as a result of which the side walls 31 facing the cavity 30 of the container 3 comprise substantially the same angle in relation to said eccentric section of rod as said connecting sections 13 and 14 as shown in Figure 4, said side walls 31 comprising a substantially V-shaped profile, the central point corresponding with the position of the rod housings 39a and 39b as shown in Figure 6.

In order to enable the mass or the ingredients that are taken away or which are deposited on the eccentric section of rod of the rod 1 to fall once more in the cavity 30 of the container 3 when said eccentric section of rod exits said container 3 during its rotation, said rod 1 is cylindrical, the sections of rod 11 and 12, the eccentric section of rod, and the connecting sections 13 and 14 also being cylindrical.

The cavity 30 of the container 3 comprises a maximum length L1 approximately equal to or greater than the length separating the sections of rod 11 and 12 in the rod 1, and a minimum length L2 approximately equal to or greater than the length of the eccentric section of rod in said rod 1. The maximum length L1 corresponds with the centre of the container 3, in other words, with the arrangement of the longitudinal vertical plane P, whereas the minimum length L2 corresponds with the sections furthest away from said longitudinal vertical plane P. In a first embodiment not shown in the Figures, said cavity 30 comprises a cross-section with an internal shape that corresponds with a section of a circumference with its centre in the axis of rotation 2 and a radius slightly greater than the radius of rotation R. The difference between said radii must be sufficiently small to prevent said eccentric section of rod from stopping stirring and/or kneading the ingredients disposed in said container and sufficiently large so that said eccentric section of rod does not get stuck in the cavity 30 or have difficulties in continuing to rotate due to said ingredients, it being of a possible size of approximately 3mm, for example. In the first embodiment the external shape of the container 3 may be similar to the shape of the cavity 30 or may comprise a substantially rectangular base to allow said container 3 to be supported on a surface without it turning over.

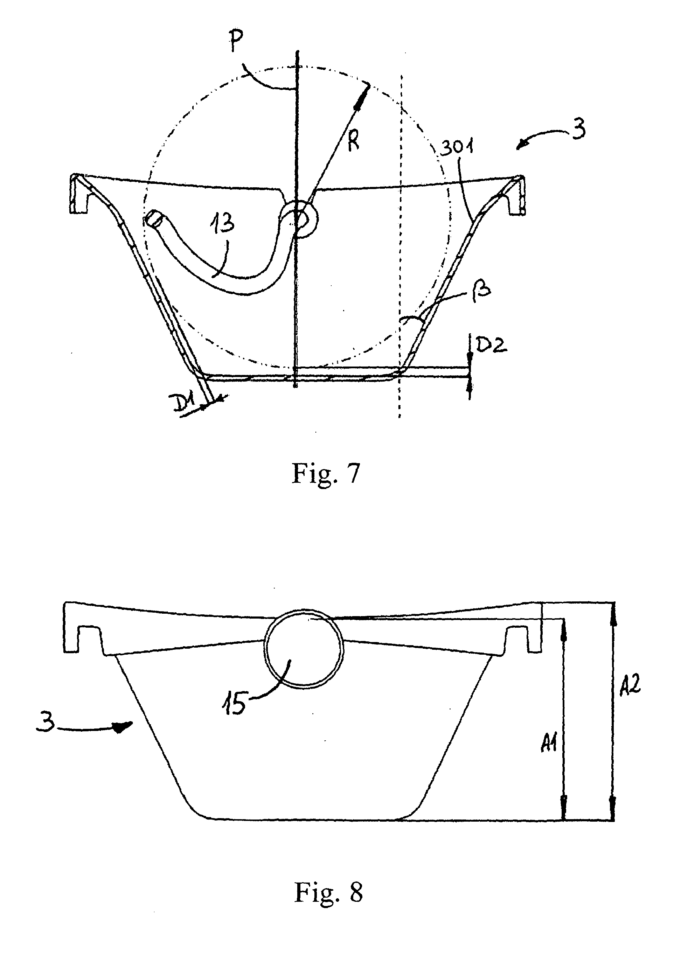

In the preferred embodiment shown in the Figures, the cavity 30 of the container 3 comprises a trapezoidal cross-section, the minimum width of said trapezoidal cross-section corresponding with part of a base 30a of said cavity 30. As the cavity 30 of the container 3 is designed in accordance with the connecting sections 13 and 14 and with the eccentric section of rod for the purpose of utilising the stirring and/or kneading capacity of the kneading means to the maximum, the height of said cavity 30 (the distance between a base 30a of said cavity 30 and the axis of rotation 2) is slightly greater than said radius of rotation R, a minimum distance D1 being defined between said base 30a and the eccentric section of rod that corresponds with the section of rod disposed in the cavity 30 and in the longitudinal vertical plane P as shown in Figure 7. Sloping walls 301 facing said cavity 30, which correspond with the sloping walls of the trapezoidal cross-section, comprise a specific angle β with the result that a second possible minimum distance D2 between said eccentric section of rod and any of the sloping walls 301 is substantially equal to the aforementioned minimum distance D1, thereby reducing the risk that part of the ingredients disposed in the container 3 are not stirred or kneaded correctly as a result of the rod 1 not acting on them. The minimum distance D1, D2 must be sufficiently small to prevent the eccentric section of rod from stopping stirring and/or kneading the ingredients disposed on the base 30a, and sufficiently large so that said eccentric section of rod does not get stuck on said base 30a or have difficulties in continuing to rotate, it being of a possible size of approximately 3mm, for example. In the preferred embodiment the external shape of the container 3 is similar to the shape of the cavity 30, although it may also not be.

When the rod 1 starts to stir the ingredients disposed in the container 3, as it has yet to form a compact mass, there is a risk that with the rotation of said rod 1 part of the ingredients may be accidentally ejected from the container 3. To reduce said risk, the cavity 30 comprises a first height A1 in relation to the base 30a at the position where the axis of rotation 2 is disposed and a second height A2 in relation to said base 30a on the side ends greater than the first height A1 as shown in Figures 7 and 8.

In the preferred embodiment, the container 3 also comprises at least a handle 38 in order to a user may hold said container 3 easily. Said handle 38 extends longitudinally from at least one of the opposing side walls 3a of said container 3, being distanced from the container cavity 30. In the preferred embodiment the container 3 also comprises a handle 38 that extends longitudinally from the other side wall 3a. Preferably each handle 38 covers the entire width of the container 3 and comprises two housings (not shown in Figures) divided by the corresponding rod housing 39a, 39b.

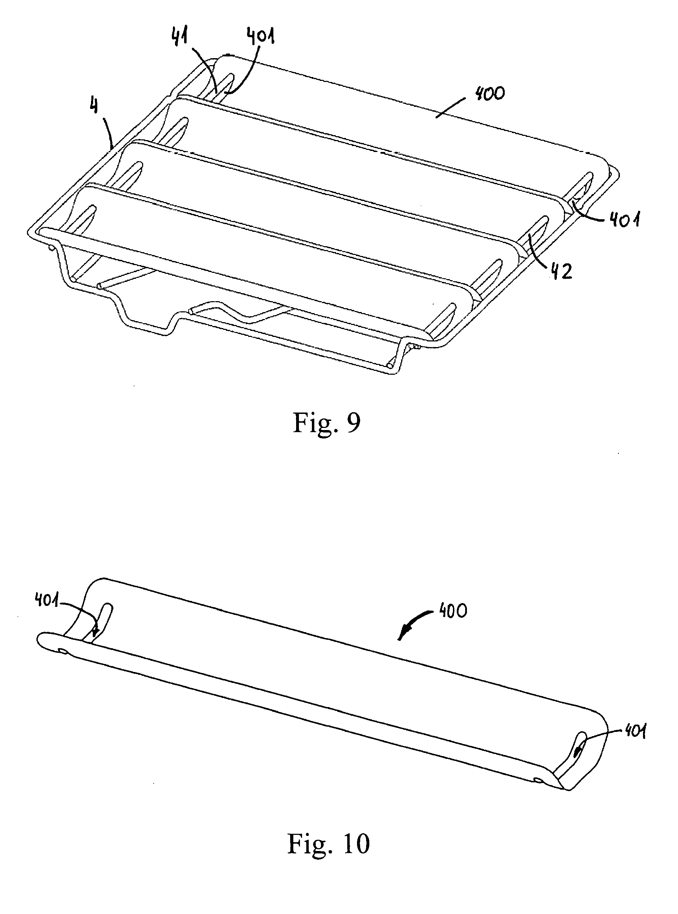

Means for obtaining loaves of French bread or "baguettes" can be disposed in the domestic oven 200, which comprise at least a longitudinal mass support 400 shown in Figures 8 and 9, with a substantially trapezoidal shaped section. When a mass is obtained with the tool 100, a user may take said mass to give it a desired shape like a loaf of French bread, and put it with the desired shape over the mass support 400 in order to obtain a loaf of French bread by means of the oven 200. Said mass support 400 comprises at least an orifice 401 for being disposed in the tray 4. Preferably said mass support 400 comprises an orifice 401 close to each of its ends and the tray 4 comprises two lateral rails 41 and 42, each of said orifices 401 being adapted to house part of said respective rails 41 and 42. Thus, said tray 4 supports said mass support 400.

When a mass has been obtained by means of the tool 100, if the user wants to obtain a loaf of French bread for example, said user removes the receptacle 3 and the rod 1 from the oven 200 and disposes the mass support 400 in the tray 4, molds the mass until getting the desired shape and disposes said mass on said mass support 400, where it is baked obtaining the bread with the desired shape. The mass support 400 is preferably made of aluminium with a non-adherent cover, so that the risk of the mass being adhered to said mass support 400 is avoided, and may comprise also plurality of through-holes (not shown in Figures) to improve the heat conduction.

## Claims

1. Tool for making bread for a household oven, which is disposed in a cavity (201) of the oven (200) in which the food is disposed, and which comprises
a container (3) with a cavity (30) in which the ingredients required to make bread are disposed,
kneading means adapted for stirring and/or kneading the ingredients disposed in the container (3), and
actuating means (9) that act on the kneading means so that said ingredients may be stirred and/or kneaded by said kneading means,
**characterised in that**
the actuating means (9) are disposed on an inner wall (202) of the cavity (201) of the oven (200) and cause the kneading means to rotate in relation to an axis of rotation (2) to stir and/or knead the ingredients disposed in the container (3),
the kneading means comprising at least an eccentric area (10) that rotates in relation to the axis of rotation (2) when the kneading means rotate in relation to said axis of rotation (2), and
the kneading means and the container (3) being disposed in relation to each other in such a way in the cavity (201) of the oven (200) that when said kneading means rotate in relation to the axis of rotation (2), at least part of the eccentric area (10) enters and exits the cavity (30) of said container (3) thereby stirring and/or kneading the ingredients disposed in said cavity (30).

2. Tool according to the preceding claim, wherein the cavity (30) of the container (3) is symmetrical in relation to a longitudinal vertical plane (P), the axis of rotation (2) being disposed on said plane.

3. Tool according to any of the preceding claims, wherein the axis of rotation (2) is substantially horizontal.

4. Tool according to any of the preceding claims, wherein the kneading means comprise a first section of rod (11) and a second section of rod (12), the eccentric area (10) being disposed between both sections of rod (11, 12) and said kneading means being connected to the actuating means (9) by one of said sections (11, 12).

5. Tool according to the preceding claim, wherein the container (3) comprises a first rod housing (39a) where the section of rod (11) is housed and a second rod housing (39b) where the second section of rod (12) is housed.

6. Tool according to the preceding claim, wherein the kneading means comprise clamping means associated to the second section of rod (12), which may keep said second section of rod (12) locked in the corresponding rod housing (39b), said clamping means comprising a hollow clamping piece (15) that is connected, while offering freedom of movement, to said second section of rod (12) surrounding it at least partially and a spring (16) fixed by one end to said second section of rod (12) and by another end to the inside of the clamping piece (15), such that when said clamping piece (15) is acted upon in order to move it in relation to the second section of rod (12), said second section of rod (12) may be released from said rod housing (39b) and the spring (16) expands, said clamping piece (15) returning to its original position by means of said spring (16) when it is no longer acted upon.

7. Tool according to any of claims 4 to 6, wherein the kneading means comprise a rod (1), the eccentric area (10) corresponding to an eccentric section of rod and being linked to the sections of rod (11, 12) by means of connecting sections (13, 14).

8. Tool according to the preceding claim, wherein the connecting sections (13, 14) are curved.

9. Tool according to either of claims 7 or 8, wherein the connecting sections (13, 14) do not extend perpendicularly to the eccentric section of rod, the eccentric section of rod being of a shorter length than the distance between the sections of rod (11, 12).

10. Tool according to any of claims 7 to 9, wherein the eccentric section of rod of the rod (1) is a section substantially parallel to the axis of rotation (2), said eccentric section of rod rotating with a specific radius of rotation (R) in relation to said axis of rotation (2).

11. Tool according to any of claims 7 to 10, wherein the rod (1) has a cylindrical cross-section.

12. Tool according to any of claims 7 to 11, wherein the inner wall (202) of the oven (200) to which the rod (1) is connected corresponds with a back wall of the cavity (201) of said oven (200) and wherein said rod (1) is disposed diagonally in said cavity (201).

13. Tool according to any of claims 2 to 12, wherein the cavity (30) of the container (3) comprises a cross-section with an internal shape that corresponds to a section of a circumference with its centre in the axis of rotation (2) and a radius slightly greater than the radius of rotation (R).

14. Tool according to any of claims 2 to 12, wherein the cavity (30) of the container (3) comprises a trapezoidal cross-section, a base (30a) of said cavity (30) comprising the base with the minimum width, sloping walls (301) of said cavity (30) being at a specific angle (β) with the result that a possible minimum distance (D1) between the eccentric area (10) of the kneading means and sloping walls (301) is substantially equal to a possible minimum distance (D2) between said eccentric area (10) and the base (30a) of said cavity (30).

15. Household oven **characterised in that** comprises a tool (100) according to any of the preceding claims.

16. - Oven according to the preceding claim, which comprises a tray (4) which is adapted for being disposed inside said oven (200) and which comprises a tray housing (40) wherein the receptacle (3) of the tool (100) can be disposed and supported.

17. - Oven according to any of claims 15 or 16, which comprises at least a longitudinal mass support (400) upon which the mass obtained with the tool (100) is disposed.

18. - Oven according to the preceding claim, wherein the mass support (400) comprises at least an orifice (401) and the tray (4) comprises at least a rail (41, 42), said orifice (401) being adapted to house part of said rail (41, 42), said tray (4) supporting said mass support (400).
